# EUROPÄISCHE PATENTSCHRIFT

(11) **EP 2 250 399 B1**
(45) Veröffentlichungstag und Bekanntmachung des Hinweises auf die Patenterteilung: **17.07.2013**
(21) Anmeldenummer: 08872977.7
(22) Anmeldetag: 09.12.2008
(51) Int. Cl.: F16H 7/08

(54) **VENTILKAPPE FÜR EIN RÜCKSCHLAGVENTIL**
VALVE CAP FOR A NON-RETURN VALVE
CAPUCHON POUR CLAPET ANTIRETOUR

(30) Priorität: 28.02.2008 DE 102008011787
(43) Veröffentlichungstag der Anmeldung: 17.11.2010
(73) Patentinhaber: Schaeffler Technologies AG & Co. KG, 91074 Herzogenaurach (DE)
(72) Erfinder: SCHÄFER, Christian, 90453 Nürnberg (DE); KRAFT, Thomas, 90616 Neuhof (DE); HARTMANN, Bernd, 91085 Weisendorf (DE)
(86) Internationale Anmeldenummer: PCT/EP2008/067132
(87) Internationale Veröffentlichungsnummer: WO 2009/106179

(56) Entgegenhaltungen:
- EP-A- 1 602 857
- WO-A-2007/097261
- JP-A- 2003 056 657
- JP-A- 2003 207 001

## Beschreibung

Die vorliegende Erfindung betrifft ein Rückschlagventil für ein hydraulisches Spannsystem von Zugmitteltrieben einer Brennkraftmaschine entsprechend dem Oberbegriff des Anspruchs 1 und wie es aus der JP 2003026657 A bekannt ist. Im Betriebszustand ermöglicht das Rückschlagventil in einer Expansionsphase des Spannsystems einen Durchfluss des Hydraulikfluids von einem Hydraulikfluidreservoir in einen Hochdruckraum. In der Kompressionsphase hat das Rückschlagventil die Aufgabe, den Hydraulikfluidstrom zu begrenzen bzw. zu unterbinden. Der Aufbau des Rückschlagventils umfasst ein auch als Ventilkappe oder Haltemittel bezeichnetes Gehäuse, in dem insbesondere ein als Kugel ausgebildeter Ventilkörper eingesetzt ist, der federkraftbeaufschlagt mit einem Durchströmquerschnitt in der Verbindung steht.

### Hintergrund der Erfindung

Aus der DE 40 35 823 C1 ist ein hydraulisches Spannsystem für Zugmitteltriebe, insbesondere Kettentriebe einer Brennkraftmaschine bekannt. Ein gegen das Zugmittel angedrückter Spannkolben ist in einem Zylinder längsverschieblich aufgenommen. Der Spannkolben und der Zylinder begrenzen einen Druckraum, zur Aufnahme eines Hydraulikfluids. Eine Bewegung des Spannkolbens in Richtung des Zugmittels, die auch als Expansionsphase bezeichnet werden kann, bewirkt eine Vergrößerung des Druckraums, wobei infolge eines sich einstellenden Unterdrucks ein Rückschlagventil öffnet, wobei Hydraulikfluid in den Druckraum nachströmen kann. In der Kompressionsphase, bei auftretender Spannung des Zugmittels wird der Spannkolben entgegengesetzt, d.h. einwärts beaufschlagt, wobei sich der Druck im Druckraum vergrößert, mit der Folge, dass sich der Spannkolben einwärts bewegt, synchron zu einer angesteuerten Teilmenge des Hydraulikfluids über einen sich zwischen dem Spannkolben und dem Gehäuse einstellenden Leckspalt. In der Kompressionsphase unterbindet folglich das Rückschlagventil einen Rückfluss des Hydraulikfluids vom Druckraum in den Vorratsraum. Dieser bekannte Aufbau führt zu einem hydraulischen Anhaften des als Kugel ausgebildeten Ventilkörpers an dem Ventilsitz des Rückschlagventils.

Weiterhin ist ein Rückschlagventilaufbau bekannt, bei der der als Kugel gestaltete Ventilkörper mit einem zentrisch als Bohrung ausgebildeten Ventilsitz in dem Gehäuse bzw. der Ventilkappe zusammenwirkt. Übereinstimmend zeigen die bekannten Rückschlagventile einen Aufbau, bei dem der Ventilkörper durch einen relativ engen sich einstellenden Spalt zwischen dem als Kugel ausgebildeten Ventilkörper und dem Gehäuse bzw. der Ventilkappe und durch eine sich hinter dem Ventilkörper durch die Ventilfeder einstellende Strömungsbeeinflussung ein wirksames Schließen zu Beginn der Kompressionsphase verzögert ist.

Bei einem Aufbau des Rückschlagventils, bei dem die Ventilkappe eine zentrische Strömungsquerschnitt aufweist wird diese bei vollständiger Strömungsquerschnitt des Ventils durch den Ventilkörper, die Kugel verschlossen, wobei zwischen der Ventilfeder, der Ventilkappe und der Kugel sich ein Raum bildet, der ebenso ein hydraulisches Anhaften bewirkt, da das Hydraulikfluid nicht ungehindert zuströmen kann, aufgrund der Abdichtung durch den Ventilkörper und außerdem durch die Ventilkörperfeder behindert ist.

### Aufgabe der Erfindung

Der Erfindung liegt die Aufgabe zugrunde, ein funktionsverbessertes Rückschlagventil zu schaffen mit einem verminderten Strömungswiderstand, zur Erzielung einer optimalen Nachströmung des Hydraulikfluids.

### Zusammenfassung der Erfindung

Zur Lösung dieser Problemstellung ist erfindungsgemäß ein Rückschlagventil mit den Merkmalen des Anspruchs 1 vorgesehen.

. Das erfindungsgemäße, in hydraulischen Spannsystemen eingesetzte Rückschlagventil gewährleistet in der geöffneten Stellung eine schnelle und verzögerungsfreie Nachströmung des Hydraulikfluids aus dem Reservoir in den Druckraum. Damit stellt sich ein verbessertes Nachsaugen des Hydraulikfluids in der Expansionsphase ein, das zu einem optimierten Schaltverhalten des Hydraulikventils führt. Andererseits verhindert der Aufbau des erfindungsgemäßen Hydraulikventils in der Kompressionsphase eine Durchströmung des Hydraulikfluids. Außerdem verhindert die erfindungsgemäße Maßnahme ein nachteiliges, hydraulisches Anhaften des Ventilkörpers an dem Ventilsitz des Gehäuses, was bei einer Umkehrung von der Expansionsphase in die Kompressionsphase zu einem verbesserten Hystereseverhalten führt.

Weitere vorteilhafte Ausgestaltungen der Erfindung sind Gegenstand der abhängigen Ansprüche 2-4.

Der Ventilsitz am Boden des auch als Ventilkappe zu bezeichnenden Gehäuses wird durch einen Strömungsquerschnitt gebildet, der keinen Formschluss mit dem Ventilkörper eingeht. Dadurch kann selbst bei einem Anliegen des Ventilkörpers am Ventilsitz eine weitestgehend ungehinderte Nachströmung des Hydraulikfluids in den Druckraum erfolgen.

Die Strömungsquerschnitte in dem Boden der Ventilkappe bzw. des Gehäuses können beliebig geometrisch geformt sein, wobei unabhängig von deren Gestaltung sich stets kein vollständiger Formschluss zwischen dem Ventilkörper und dem einen Strömungsquerschnitt bildenden Ventilsitz einstellt. Eine bevorzugte Gestaltung sieht einen nicht kreisrunden, mit dem Ventilkörper zusammenwirkenden Strömungsquerschnitt vor. Alternativ dazu bietet es sich gemäß der Erfindung an, in dem Boden der Ventilkappe einen ovalen, mehreckförmig, beispielsweise dreieckig oder viereckig gestalteten Strömungsquerschnitt einzubringen oder einen polygonartigen Strömungsquerschnitt mit ausgerundeten Ecken.

Weiterhin bietet es sich gemäß der Erfindung an, in dem eben gestalteten Boden des Gehäuses bzw. der Ventilkappe mehrere Strömungsquerschnitte anzuordnen. Die Lage dieser Strömungsquerschnitte erfolgt so, dass in einer Endlage des Ventilkörpers an dem Ventilsitz des Bodens dieser die Durchströmquerschnitte der Strömungsquerschnitten teilweise bzw. bereichsweise abdeckt, sodass ein nahezu ungehindertes Nachströmen von Hydraulikfluid möglich ist.

Als bevorzugtes Beispiel einer Anordnung von mehreren Strömungsquerschnitten sieht drei eng zusammengefasste kreisrunde Bohrungen vorzusehen, deren Außenkontur ein gleichschenkliges Dreieck bildet. Im Fall einer zentrischen Anordnung dieser drei Bohrungen stützt sich der Ventilkörper in einer Endlage an einem zentrischen Steg zwischen den Bohrungen ab, wodurch die Hydraulikfluid-Strömung in der Expansionsphase kaum beeinflusst wird.

Eine weitere erfindungsgemäße Ausgestaltung sieht vor, die Strömungsquerschnitt in einem konvex gestalteten Abschnitt des Bodens einzubringen, wobei sich der Krümmungsradius des Bodens von dem Radius des als Kugel gestalteten Ventilkörpers unterscheidet. Vorteilhaft ist dazu der Krümmungsradius des Bodens größer als der des Ventilkörpers. Alternativ dazu eignet sich eine umgekehrte Auslegung, wobei der kleiner ausgelegte Krümmungsradius des Bodens gegenüber dem des Ventilkörpers sich lokal auf einen Strömungsquerschnittsbereich beschränkt, von dem ausgehend sich ein zum Ventilkörper grö-βerer Krümmungsradius anschließt. Als Maßnahme um ein nachteiliges hydraulisches Anhaften zu vermeiden, bietet es sich außerdem an, den gegenüber dem Ventilkörper kleiner ausgeführten Krümmungsradius des Bodens in einem gestuften Abschnitt vorzusehen, wobei gleichzeitig die Strömungsquerschnitte nicht kreisrund sondern beispielsweise oval ausgeführt sind.

Das erfindungsgemäße Rückschlagventil schließt weiterhin eine Auslegung ein, bei dem der Boden so gestaltet ist, dass eine dem Ventilkörper zugeordnete Kontaktfläche mit zwei senkrecht aufeinander stehenden, jeweils eine Bewegungsachse des Ventilkörpers enthaltenden Schnittebenen unterschiedliche Krümmungen bilden.

### Kurze Beschreibung der Zeichnungen

Ausführungsbeispiele der Erfindung sind in Zeichnungen dargestellt, die nachfolgend beschrieben werden, wobei sich die Erfindung nicht auf diese Ausführungsbeispiele beschränkt. Es zeigen:
- Figur 1: In einem Längsschnitt den Aufbau eines hydraulischen Spannsystems;
- Figuren 2a bis 6c: In Einzelteilzeichnungen erfindungsgemäß gestaltete Rückschlagventile mit unterschiedlich ausgeführten Strömungsquerschnitten im Boden;

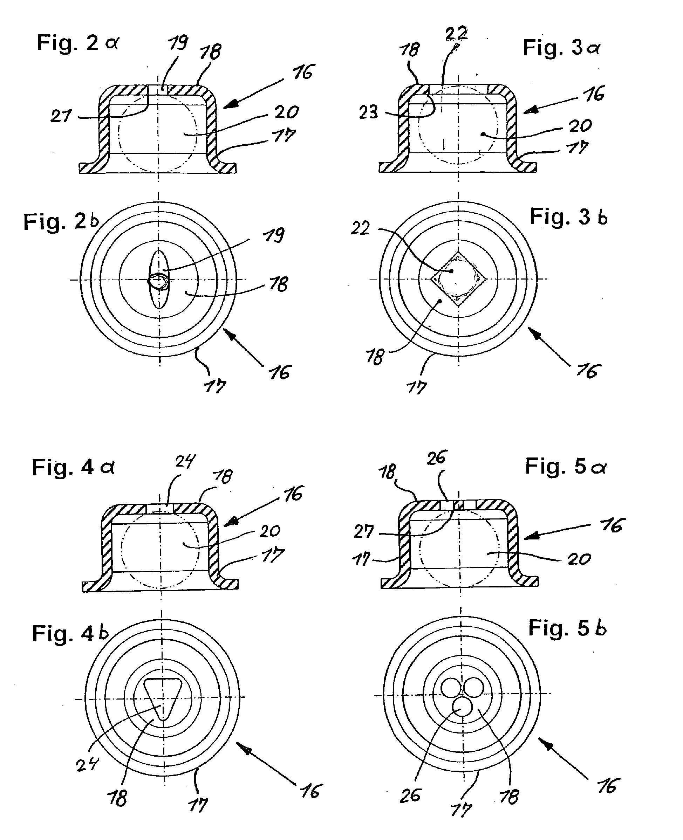

- Figur 2a: ein erstes Ausführungsbeispiel eines erfindungsgemäßen Rückschlagventils;
- Figur 2b: in einer Draufsicht das Rückschlagventil gemäß Figur 2a, bei dem der Boden ein ovalen Strömungsquerschnitt einschließt;
- Figur 3a: ein zweites Ausführungsbeispiel eines erfindungsgemäßen Rückschlagventils;
- Figur 3b: die Draufsicht des in Figur 3a abgebildeten Rückschlagventils mit einer quadratischen Ausnehmung als Strömungsquerschnitt;
- Figur 4a: ein drittes Ausführungsbeispiel eines erfindungsgemäßen Rückschlagventils;
- Figur 4b: in der Draufsicht das Rückschlagventil gemäß Figur 4a mit einem polygonartig geformten Strömungsquerschnitt;
- Figur 5a: ein viertes Ausführungsbeispiel eines erfindungsgemäßen Rückschlagventils;
- Figur 5b: die Draufsicht des Rückschlagventils gemäß Figur 5a bei dem die Ventilkappe drei eng benachbarte Bohrungen als Strömungsquerschnitt einschließt;

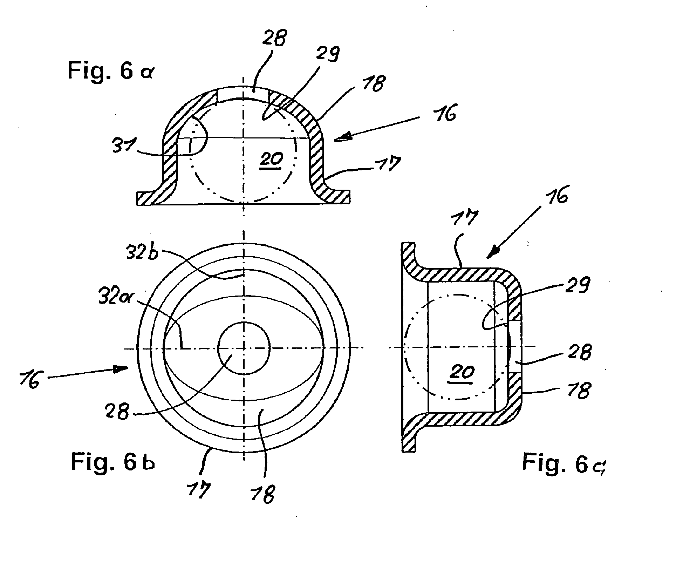

- Figur 6a: ein fünftes Ausführungsbeispiel eines erfindungsgemäßen Rückschlagventils;
- Figur 6b: die Draufsicht des Rückschlagventils gemäß Figur 6a;
- Figur 6c: die Seitenansicht des Rückschlagventils gemäß Figur 6b.

### Detaillierte Beschreibung der Zeichnungen

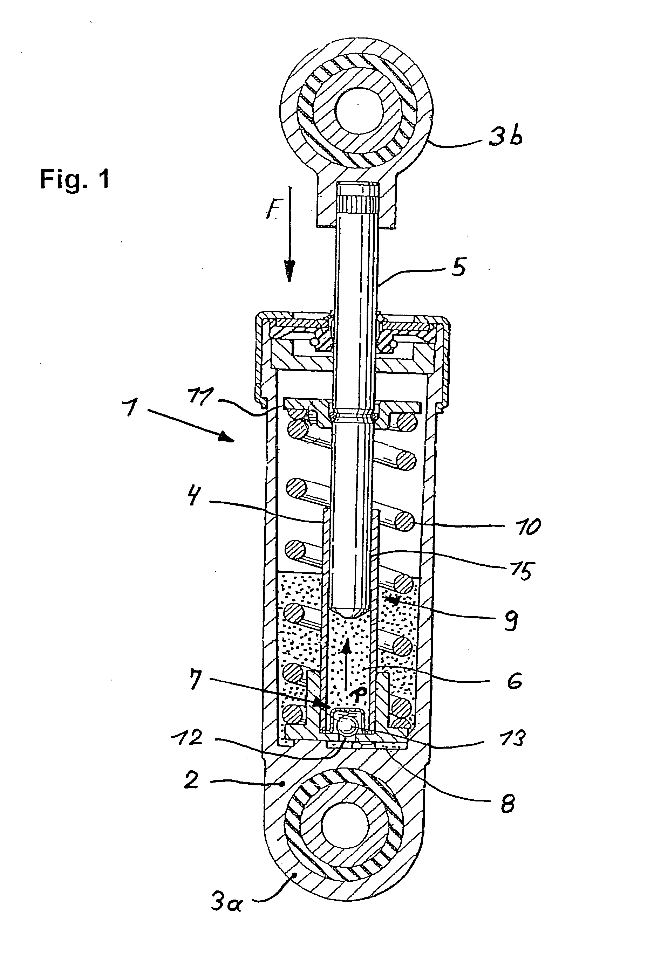

In Figur 1 ist ein hydraulisches Spannsystem 1 in einer Schnittdarstellung abgebildet, welches einem Zugmitteltrieb zugeordnet ist und über eine in Figur 1 nicht abgebildete Spannrolle mittelbar mit einem Zugmittel eines Zugmitteltriebs zusammenwirkt. Der Aufbau umfasst ein Gehäuse 2, welches über ein Befestigungsauge 3a ortsfest und dabei schwenkbar, beispielsweise an einem Gehäuse der Brennkraftmaschine angelenkt ist. Das Gehäuse 2 bildet ein topfartig gestaltetes Bauteil in dem zentrisch ein Zylinder 4 eingebracht ist, der zur Aufnahme eines linear verschiebbaren Kolbens 5 bestimmt ist. Der Zylinder 4 in Verbindung mit dem Kolben 5 begrenzen einen mit Hydraulikfluid gefüllten Druckraum 6, der über einen Kanal 8 des Gehäuses 2 und einem Durchströmquerschnitt 12 des Zylinders 4 mit einem Reservoir 9 für das Hydraulikfluid verbunden ist. Das Reservoir 9 wird dabei außenseitig von dem Gehäuse 2 und innen von der Mantelfläche des Zylinders 4 begrenzt. Eine weiterhin im Zylinder 4 integrierte Druckfeder 10 ist mit einem Federende an einem Boden des Gehäuses 2 und mit dem weiteren Federende an einer am Kolben 5 lagefixierten Scheibe 11 abgestützt. Die Druckfeder 10 beaufschlagt den Kolben 5 in Richtung einer Kraftrichtung "R" und bewirkt eine Stellbewegung des Kolbens 5 und folglich eine Kraftbeaufschlagung einer Spannrolle, die mit dem Befestigungsauge 3b verbundenen ist. Diese auch als Expansionsbewegung zu bezeichnende Kolbenbewegung verursacht einen Unterdruck im Druckraum 6, wodurch Hydraulikfluid über das Rückschlagventil 7, von dem Reservoir 9 durch den Kanal 8 des Gehäuses 2 und dem Durchströmquerschnitt 12 des Zylinders 4 in den Druckraum 6 einströmt. In der Kompressionsphase, bei einer umgekehrten Stellbewegung des Kolbens 5 in Kraftrichtung "F", schließt das Rückschlagventil 7, in dem ein Ventilkörper 13 sich dichtend am Ventilsitz 14 abstützt. Der in den Druckraum 6 eintretende Kolben 5 verdrängt dabei eine Teilmenge des Hydraulikfluids aus dem Druckraum 6 über einen sich zwischen dem Kolben 5 und dem Zylinder 4 einstellenden Leckspalt 15 in das Reservoir 9.

Die Figuren 2a - 6c zeigen Varianten von erfindungsgemäß gestalteten Rückschlagventilen, die sich insbesondere durch abweichend ausgebildete Strömungsquerschnitte im Boden des Gehäuse des Rückschlagventils unterscheiden.

Die Figuren 2a und 2b zeigen in unterschiedlichen Ansichten das Rückschlagventil 16, bei dem das topfartig gestaltete, auch als Ventilkappe zu bezeichnende Gehäuse 17 im Boden 18 einen ovalen, den Ventilsitz 21 bildenden Strömungsquerschnitt 19 einschließt. Aufgrund der ovalen Formgebung des Strömungsquerschnitts 19 wird dieser von dem als Kugel gestalteten Ventilkörper 20 in der Endlage nicht vollständig geschlossen. Damit kann in der Expansionsphase eine Teilmenge des Hydraulikfluids das Rückschlagventil 16 durchströmen.

Gemäß den Figuren 3a, 3b weist der Boden 18 des Rückschlagventils 16 einen quadratisch geformten Strömungsquerschnitt 22 auf, wodurch sich ebenfalls ein Ventilsitz 23 einstellt, der von dem anliegenden Ventilkörper 20 nicht vollständig geschlossen wird.

Die Figuren 4a, 4b beziehen sich auf einen polygonal ausgeführten Strömungsquerschnitt 24 im Boden 18 des Gehäuses 17, der ebenfalls keinen vollständigen Formschluss mit dem Ventilkörper 20 ermöglicht.

Eine weitere Variante ist in den Figuren 5a, 5b abgebildet, bei dem das Rückschlagventil 16 als Strömungsquerschnitt 26 drei gleich dimensionierte, in einem gleichseitigen Dreieck im Boden 18 eingebrachte Bohrungen einschließt, die gemeinsam einen von dem Ventilkörper 20 nur begrenzt verschließbaren Ventilsitz 27 bilden.

Gemäß den Figuren 6a - 6c schließt das Rückschlagventil 16 ein Gehäuse 17 mit einem Boden 18 ein, der so gestaltet ist, dass eine dem Ventilkörper 20 zugeordnete Kontaktfläche 31 zwei senkrecht aufeinander stehende Schnittebenen 32a, 32 b umfasst
, die jeweils eine Bewegungsachse des Ventilkörpers 20 mit zueinander unterschiedlichen Krümmungen bilden.

**Bezugszahlenliste**

| | |
|---|---|
| 1 | Spannsystem |
| 2 | Gehäuse |
| 3a | Befestigungsauge |
| 3b | Befestigungsauge |
| 4 | Zylinder |
| 5 | Kolben |
| 6 | Druckraum |
| 7 | Rückschlagventil |
| 8 | Kanal |
| 9 | Reservoir |
| 10 | Druckfeder |
| 11 | Scheibe |
| 12 | Durchströmquerschnitt |
| 13 | Ventilkörper |
| 14 | Ventilsitz |
| 15 | Leckspalt |
| 16 | Rückschlagventil |
| 17 | Gehäuse |
| 18 | Boden |
| 19 | Strömungsquerschnitt |
| 20 | Ventilkörper |
| 21 | Ventilsitz |
| 22 | Strömungsquerschnitt |
| 23 | Ventilsitz |
| 24 | Strömungsquerschnitt |
| 25 | Ventilsitz |
| 26 | Strömungsquerschnitt |
| 27 | Ventilsitz |
| 28 | Strömungsquerschnitt |
| 29 | Ventilsitz |
| 30 | Spaltmaß |
| 31 | Kontaktfläche |
| 32a | Schnittebene |
| 32b | Schnittebene |

## Patentansprüche

1. Rückschlagventil eines hydraulischen Spannsystems (1) von Zugmitteltrieben von Brennkraftmaschinen, eingesetzt zwischen einem mit Hydraulikfluid gefüllten Druckraum (6) und einem Reservoir (9), umfassend einen in einer Ventilkappe (17) eingesetzten, als Kugel ausgebildeten Ventilkörper (20), der bei geschlossenem Rückschlagventil (16) federkraftbeaufschlagt an einem Ventilsitz (14) eines Durchströmquerschnitts (12) angestützt ist, wobei bei geöffnetem Rückschlagventil (16) ein durch einen Ventilsitz (21, 23, 29) der Ventilkappe (17) gebildeter Strömungsquerschnitt (19, 22, 24, 28) eine Fluidströmung durch das Rückschlagventil (16) sicherstellt, **dadurch gekennzeichnet, dass** der Ventilsitz (21, 23, 29) der Ventilkappe (17) in einem Boden (18) der Ventilkappe (17) positioniert ist, wobei der durch den Ventilsitz (21, 23, 29) der Ventilkappe (17) gebildete Strömungsquerschnitt (19, 22, 24, 28) nicht vollständig geschlossen ist, wenn die Kugel (20) am Ventilsitz (21, 23, 29) der Ventilkappe (17) anliegt.

2. Rückschlagventil nach Anspruch 1, **dadurch gekennzeichnet, dass** der Strömungsquerschnitt (19, 22, 24) von der Kreisform abweichend gestaltet ist.

3. Rückschlagventil nach Anspruch 1, **dadurch gekennzeichnet, dass** der Strömungsquerschnitt (19, 22, 24) oval oder polygonal ist.

4. Rückschlagventil nach Anspruch 1, **dadurch gekennzeichnet, dass** eine der Kugel (20) zugeordnete Kontaktfläche des Bodens (18) in zwei senkrecht aufeinander stehenden und jeweils die Bewegungsachse der Kugel (20) enthaltenden Schnittebenen (32a, 32b) unterschiedliche Krümmungen aufweist.

## Claims

1. Check valve of a hydraulic tensioning system (1) of traction mechanism drives of internal combustion engines, said check valve being installed between a hydraulic-fluid-filled pressure chamber (6) and a Reservoir (9) and comprising a valve body (20) which is inserted in a valve cap (17) and which is in the form of a ball and which, when the check valve (16) is closed, is supported under spring force loading against a valve seat (14) of a throughflow cross section (12), wherein, when the check valve (16) is open, a flow cross section (19, 22, 24, 28) formed by a valve seat (21, 23, 29) of the valve cap (17) ensures a fluid flow through the check valve (16), **characterized in that** the valve seat (21, 23, 29) of the valve cap (17) is positioned in a base (18) of the valve cap (17), wherein the flow cross section (19, 22, 24, 28) formed by the valve seat (21, 23, 29) of the valve cap (17) is not completely closed when the ball (20) bears against the valve seat (21, 23, 29) of the valve cap (17).

2. Check valve according to Claim 1, **characterized in that** the flow cross section (19, 22, 24) is of a design deviating from a circular shape.

3. Check valve according to Claim 1, **characterized in that** the flow cross section (19, 22, 24) is oval or polygonal.

4. Check valve according to Claim 1, **characterized in that** a contact surface, which is assigned to the ball (20), of the base (18) has different curvatures in two section planes (32a, 32b) which are perpendicular to one another and which each include the movement axis of the ball (20).

## Revendications

1. Clapet antiretour d'un système de serrage hydraulique (1) de moyens d'entraînement de traction de moteurs à combustion interne, inséré entre un espace de pression (6) rempli de fluide hydraulique et un réservoir (9), comprenant un corps de clapet (20) réalisé sous forme de bille et inséré dans un chapeau de clapet (17), lequel corps de clapet, lorsque le clapet antiretour (16) est fermé, est supporté sur un siège de clapet (14) d'une section transversale d'écoulement (12) de manière sollicitée par une force de ressort, une section transversale d'écoulement (19, 22, 24, 28) formée par un siège de soupape (21, 23, 29) du chapeau de clapet (17) garantissant un écroulement fluidique à travers le clapet antiretour (16), lorsque le clapet antiretour (16) est ouvert, **caractérisé en ce que** le siège de clapet (21, 23, 29) du chapeau de clapet (17) est positionné dans un fond (18) du chapeau de clapet (17), la section transversale d'écoulement (19, 22, 24, 28) formée par le siège de clapet (21, 23, 29) du chapeau de clapet (17) n'étant pas complètement fermée lorsque la bille (20) s'applique contre le siège de clapet (21, 23, 29) du chapeau de clapet (17).

2. Clapet antiretour selon la revendication 1, **caractérisé en ce que** la section transversale d'écoulement (19, 22, 24) est configurée de manière à s'écarter de la forme circulaire.

3. Clapet antiretour selon la revendication 1, **caractérisé en ce que** la section transversale d'écoulement (19, 22, 24) est ovale ou polygonale.

4. Clapet antiretour selon la revendication 1, **caractérisé en ce qu'**une surface de contact du fond (18) associée à la bille (20) présente des courbures différentes dans deux plans de coupe (32a, 32b) perpendiculaires l'un à l'autre et contenant à chaque fois l'axe de déplacement de la bille (20).
